# EUROPÄISCHE PATENTANMELDUNG

(11) **EP 1 459 956 A2**
(43) Veröffentlichungstag der Anmeldung: **22.09.2004**
(21) Anmeldenummer: 04005168.2
(22) Anmeldetag: 04.03.2004
(51) Int. Cl.: B62B 3/06

(54) **Flurförderzeug**

(30) Priorität: 20.03.2003 DE 10312433
(71) Anmelder: STILL S.A.R.L., 77107 Meaux Cedex (FR)
(72) Erfinder: Fortin, Dominique, 60160 Montataire (FR); Garcia, David, 60500 Chantilly (FR)
(74) Vertreter: Lang, Michael

(57) **Zusammenfassung**

Die Erfindung betrifft ein Flurförderzeug, insbesondere Hubwagen (1), mit einem gabelförmigen Lastaufnahmemittel (2). Das Lastaufnahmemittel (2) weist an seinem lastseitigen Endbereich mindestens einen Bereich (15) auf, der in seiner Höhe und/oder Neigung gegenüber dem übrigen Teil des Lastaufnahmemittels (2) verstellbar ist.

## Beschreibung

Die Erfindung betrifft ein Flurförderzeug, insbesondere Hubwagen, mit einem gabelförmigen Lastaufnahmemittel.

Derartige Flurförderzeuge werden häufig zum Transport von auf oder in Paletten gelagerten Gütem verwendet. Zur Aufnahme der Last wird das Lastaufnahmemittel, das meist in Form einer zweizinkigen Gabel ausgebildet ist, unter die Palette geführt und angehoben. Zu diesem Zweck sind unter dem Boden der Palette Distanzstücke angeordnet, so dass das Lastaufnahmemittel zwischen Palettenboden und Aufstandsfläche der Palette eingeführt werden kann, um diese anzuheben. Aus Stabilitätsgründen sind die Distanzstücke häufig miteinander an den Aufstandsflächen verbunden. Durch diese Verbindungen wird jedoch der für das Einführen des Lastaufnahmemittels zur Verfügung stehendem Raum eingeschränkt, weshalb diese Verbindungen üblicherweise nur in Längsrichtung der Palette vorhanden sind. Das Einführen des Lastaufnahmemittels in Querrichtung ist somit erheblich erschwert, besonders bei einem Hubwagen, bei dem am lastseitigen Ende des Lastaufnahmemittels Rollen angeordnet sind, die dieses tragen. Die Lastrollen müssen über die Verbindungselemente hinwegrollen, was zu einer Anhebung der Spitzen des Lastaufnahmemittels führt. Damit die Spitzen des Lastaufnahmemittels nicht am Palettenboden anstoßen und um generell das Einführen in enge Bereiche zu erleichtern, sind die Spitzen des Lastaufnahmemittels üblicherweise auf ihrer Oberseite abgeschrägt. Bei aufgenommener Last ist dieser abgeschrägte Bereich dann jedoch nicht mehr uneingeschränkt zum Tragen der Last geeignet. Liegt die Last auf lediglich zwei Auflagepunkten je Zinke des gabelförmigen Lastaufnahmemittels und ist einer dieser Punkte der abgeschrägte Bereich, so besteht eine erhöhte Gefahr, dass die Last, insbesondere bei abrupten Bewegungen des Flurförderzeugs, vom Lastaufnahmemittel rutscht. Um dies zu vermeiden, kann das Lastaufnahmemittel mit einer rutschfesten Oberfläche versehen sein, doch erschwert dies unter Umständen das Einführen des Lastaufnahmemittels unter die Palette, da ein freies Gleiten nicht mehr möglich ist.

Sind mehr als 2 Auflagepunkte je Zinke vorhanden, ist je nach Beladungszustand der Palette ein Kippen der Palette möglich oder aber der Bereich der Palette, der sich über dem abgeschrägten Bereich befindet, wird nicht ausreichend unterstützt und somit die Palette übermäßig beansprucht.

Der Erfindung liegt daher die Aufgabe zugrunde, ein Flurförderzeug mit einem gabelförmigen Lastaufnahmemittel zu schaffen, welches sich auch in Querrichtung leicht und sicher in eine Palette einführen lässt und diese beim Transport sicher und mit möglichst gleichmäßiger Belastung trägt.

Diese Aufgabe wird erfindungsgemäß dadurch gelöst, dass das Lastaufnahmemittel an seinem lastseitigen Endbereich mindestens einen Bereich aufweist, der in seiner Höhe und/oder Neigung gegenüber dem übrigen Teil des Lastaufnahmemittels verstellbar ist.

Dadurch kann das Lastaufnahmemittel, insbesondere bei auf der Oberseite abgeschrägten Spitzen, optimal an die gewünschte Tätigkeit angepasst werden, indem zum Einführen des Lastaufnahmemittels ein größerer Abstand zwischen dem Lastaufnahmemittel und der Palette einstellbar ist, während für den Transport der Palette eine annähernd ebene Auflagefläche des Lastaufnahmemittels zur Verfügung steht.

Es ist besonders vorteilhaft, wenn die Höhe und/oder Neigung des höhen- und/oder neigungsverstellbaren Bereichs des Lastaufnahmemittels in Abhängigkeit von der Hubhöhe des Lastaufnahmemittels, vorzugsweise automatisch, einstellbar ist. Dadurch ist die für die augenblickliche Höhe und damit Transportaufgabe optimale Stellung des verstellbaren Bereichs gewährleistet. Bei-einer automatischen Verstellung kann ohne Zutun einer Bedienperson beim Aufnehmen und beim Transport der Last die optimale Stellung des verstellbaren Bereichs eingestellt werden. Bedienfehler werden so weitgehend ausgeschlossen.

In einer besonders vorteilhaften Ausführungsform steht der höhen- und/oder neigungsverstellbare Bereich des Lastaufnahmemittels mit einer Hubvorrichtung des Lastaufnahmemittels in Wirkverbindung. Dies stellt eine besonders einfache Möglichkeit dar, die Stellung des verstellbaren Bereichs in Abhängigkeit von der Hubhöhe einzustellen.

Weiterhin ist es vorteilhaft, wenn der höhen- und/oder neigungsverstellbare Bereich des Lastaufnahmemittels beim Überschreiten einer zur Aufnahme von Lasten, insbesondere Paletten, vom Boden geeigneten Hubhöhe des Lastaufnahmemittels derart einstellbar ist, dass der höhen- und/oder neigungsverstellbare Bereich die gleiche Höhe und/oder Neigung wie der übrige mit der Last in Kontakt stehende Teil des Lastaufnahmemittels aufweist. Dadurch besitzt das Lastaufnahmemittel beim Transport der Last eine gleichmäßige Auflagefläche und ein sicherer Transport der Last ist möglich.

Es ist weiterhin von Vorteil, wenn der höhen- und/oder neigungsverstellbare Bereich des Lastaufnahmemittels unterhalb einer zur Aufnahme von Lasten, insbesondere Paletten, vom Boden geeigneten Hubhöhe des Lastaufnahmemittels auf eine solche Höhe und/oder Neigung einstellbar ist, bei der eine möglichst einfache Aufnahme der Last ermöglicht wird.

In einer besonders zweckmäßigen Ausgestaltung der Erfindung ist die mit der Last beaufschlagte Oberfläche des höhen- und/oder neigungsverstellbaren Bereichs derart ausgebildet, dass ein Verrutschen der Last erschwert oder verhindert wird. Dadurch wird die Gefahr eines Verrutschens der Last während des Transports bei abrupten Bewegungen des Flurförderzeugs wesentlich reduziert. Eine Behinderung beim Aufnehmen der Last durch die rutschfeste Oberfläche ist durch die bewegliche Ausführung des höhen- und/oder neigungsverstellbaren Bereichs minimiert.

Weiterhin ist es zweckmäßig, wenn die mit der Last beaufschlagte Oberfläche des höhen- und/oder neigungsverstellbaren-Bereichs Erhebungen aufweist, die insbesondere kreisförmig oder als in Querrichtung des Lastaufnahmemittels sich erstreckende Rippen ausgebildet sind. Diese Erhebungen drücken sich bei Holzpaletten in das Holz der Palette und verhindern so ein Verrutschen der Palette bei abrupten Bewegungen des Flurförderzeugs. Bei Metallpaletten greifen diese Erhebungen beispielsweise in Versteifungselemente oder andere Unebenheiten des Palettenbodens und verhindern so ein Verrutschen der Palette.

In einer vorteilhaften Ausbildung der Erfindung wird die Verstellung des höhenund/oder neigungsverstellbaren Bereichs durch mechanische Mittel, insbesondere einen Hebelmechanismus, vorgenommen, die mit der Vorrichtung zur Höhenverstellung des Lastaufnahmemittels, insbesondere den Lastrollenträgerhebeln, in Wirkverbindung stehen. Dies ermöglicht einen einfachen Aufbau und eine sichere Funktion.

Weitere Vorteile und Einzelheiten der Erfindung werden anhand des in den schematischen Figuren dargestellten Ausführungsbeispiels näher erläutert. Dabei zeigt
- Figur 1: einen Hubwagen mit einem erfindungsgemäßen gabelförmigen Lastaufnahmemittel in Seitenansicht beim Einführen des Lastaufnahmemittels in eine Palette,
- Figur 2: den lastseitigen Endbereich eines erfindungsgemäßen Lastaufnahmemittels in Seitenansicht beim Einführen des Lastaufnahmemittels in eine Palette, wobei eine Laufrolle ein Verbindungsteil zwischen Distanzstücken der Palette überquert,
- Figur 3: den lastseitigen Endbereich eines erfindungsgemäßen Lastaufnahmemittels in Seitenansicht beim Einführen des Lastaufnahmemittels in eine Palette, wobei sich eine Laufrolle zwischen zwei Verbindungsteilen zwischen Distanzstücken der Palette befindet,
- Figur 4: den lastseitigen Endbereich eines erfindungsgemäßen Lastaufnahmemittels in Draufsicht,
- Figur 5: den lastseitigen Endbereich eines erfindungsgemäßen Lastaufnahmemittels in Seitenansicht beim Anheben einer Palette, wobei sich eine Laufrolle zwischen zwei Verbindungsteilen zwischen Distanzstücken der Palette befindet.

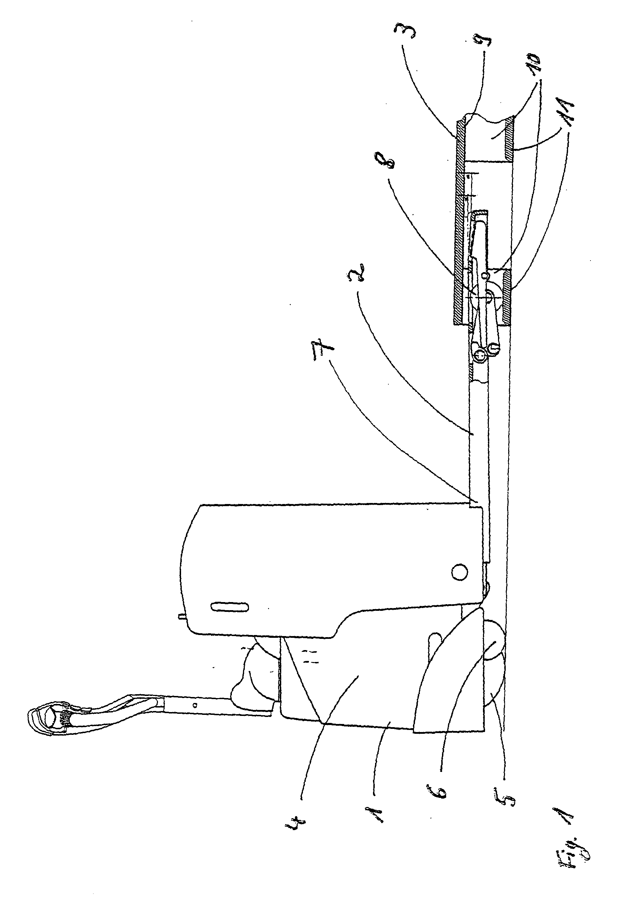

In Figur 1 ist ein Hubwagen 1 mit einem erfindungsgemäßen gabelförmigen Lastaufnahmemittel 2 beim Einführen des Lastaufnahmemittels 2 in eine Palette 3 gezeigt. Der Hubwagen 1 besteht aus einem Antriebsteil 4 mit einem Antriebsrad 5 und einem Stützrad 6, sowie einem Lastteil 7 mit dem Lastaufnahmemittel 2 und Laufrollen 8. Im Antriebsteil 4 sind unter anderem ein Fahr- und ein Hubantrieb untergebracht, die hier nicht dargestellt sind. Unter dem Lastboden 9 der Palette 3 sind Distanzstücke 10 angeordnet, die über Verbindungsstücke 11 miteinander verbunden sind. Beim Einführen des Lasttragemittels 2 in die Palette 3 muss die Laufrolle 8 über das Verbindungsstück 11 wie dargestellt hinwegrollen.

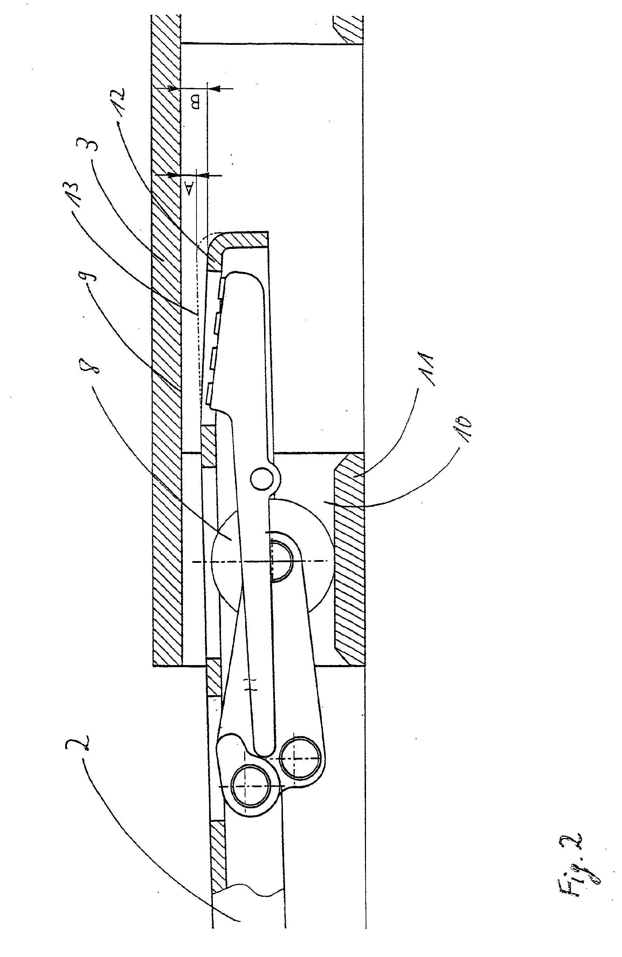

In Figur 2 ist der lastseitige Endbereich eines erfindungsgemäßen Lastaufnahmemittels 2 beim Einführen des Lastaufnahmemittels 2 in eine Palette 3 dargestellt, wobei die Laufrolle 8 das Verbindungsteil 11 zwischen den Distanzstücken 10 der Palette 3 überquert. Die Spitze 12 des Lastaufnahmemittels 2 ist abgeschrägt, wie dies auch bei Lastaufnahmemitteln nach dem Stand der Technik der Fall ist. Zum Vergleich ist gestrichelt die Spitze 13 eines nicht abgeschrägten Lastaufnahmemittels eingezeichnet. Der Abstand zwischen dem Palettenboden 9 und der Spitze 13 des nicht abgeschrägten Lastaufnahmemittels ist mit "A" bezeichnet, der Abstand zwischen dem Palettenboden 9 und der Spitze 12 des nicht abgeschrägten Lastaufnahmemittels mit "B". Deutlich ist der größere Abstand der Spitze 12 zum Palettenboden 9 zu erkennen, der sich aus der Abschrägung der Spitze 12 ergibt.

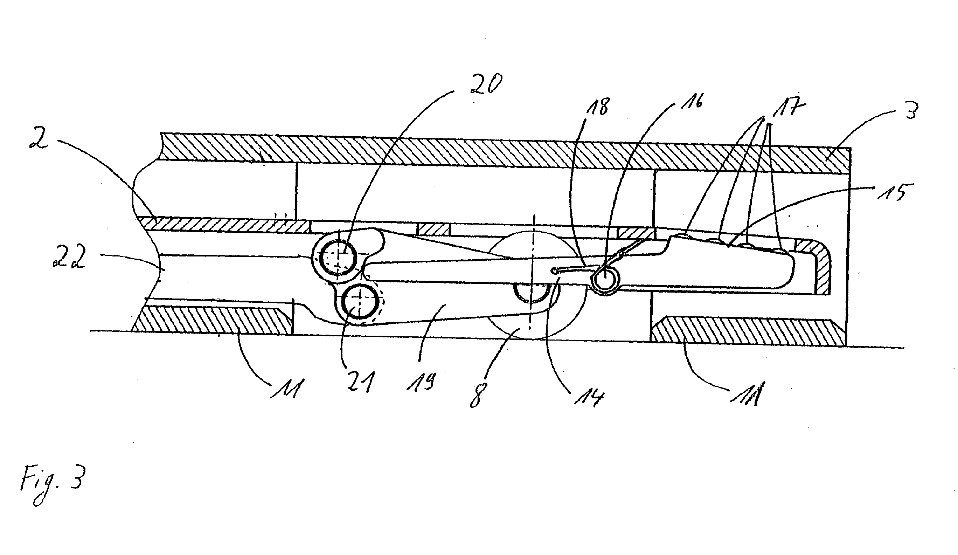

Figur 3 zeigt den lastseitigen Endbereich eines erfindungsgemäßen Lastaufnahmemittels 2 in Seitenansicht beim Einführen des Lastaufnahmemittels 2 in eine Palette 3, wobei sich die Laufrolle 8 zwischen zwei Verbindungsteilen 11 befindet. Ein Hebel 14 trägt an seinem Ende einen plattenförmigen Bereich 15, welcher in seiner Höhe und Neigung gegenüber dem übrigen Teil des Lastaufnahmemittels 2 durch eine Drehung des Hebels 14 um eine Achse 16 verstellbar ist. Auf dem plattenförmigen Bereich 15 sind Erhebungen 17 angeordnet. Beim Einführen des Lastaufnahmemittels 2 in die Palette 3 ist der Bereich 15 vollständig innerhalb der Kontur des Lastaufnahmemittels 2 angeordnet. Dadurch wird das Einführen des Lastaufnahmemittels 2 nicht behindert. Um sicherzustellen, dass der Bereich 15 vollständig innerhalb der Kontur des Lastaufnahmemittels 2 bleibt, wird der Hebel 14 im dargestellten Ausführungsbeispiel durch eine Feder 18 nach oben gedrückt und so der Bereich 15 nach unten geschwenkt.

Ebenfalls dargestellt ist ein Hebel 19, der die Lastrolle 8 trägt. Der Hebel 19 ist um eine Achse 20 drehbar angeordnet. Über eine Achse 21 ist der Hebel 19 mit einer Stange 22 mit dem Hubantrieb des Hubwagens 1 verbunden. Durch eine Bewegung der Stange 22 erfolgt eine Drehung des Hebels 19 um die Achse 20, so dass die Rolle 8 nach unten gedrückt und das Lastaufnahmemmittel 2 angehoben wird.

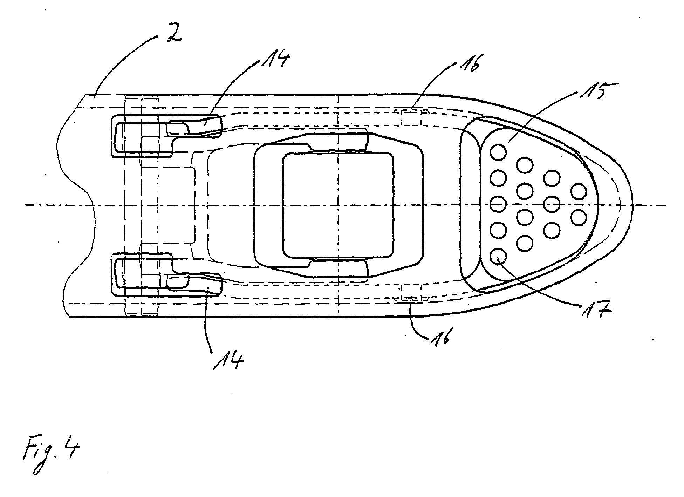

In Figur 4 ist der lastseitige Endbereich eines erfindungsgemäßen Lastaufnahmemittels 2 in Draufsicht gezeigt. Der plattenförmige Bereich 15, der in seiner Höhe und Neigung gegenüber dem übrigen Teil des Lastaufnahmemittels 2 verstellbar ist, wird beidseitig von jeweils einem Hebel 14 getragen, welcher jeweils um eine Achse 16 schwenkbar gelagert ist. Auf der Oberfläche des Bereichs 15 sind kreisförmige Erhebungen 17 angeordnet.

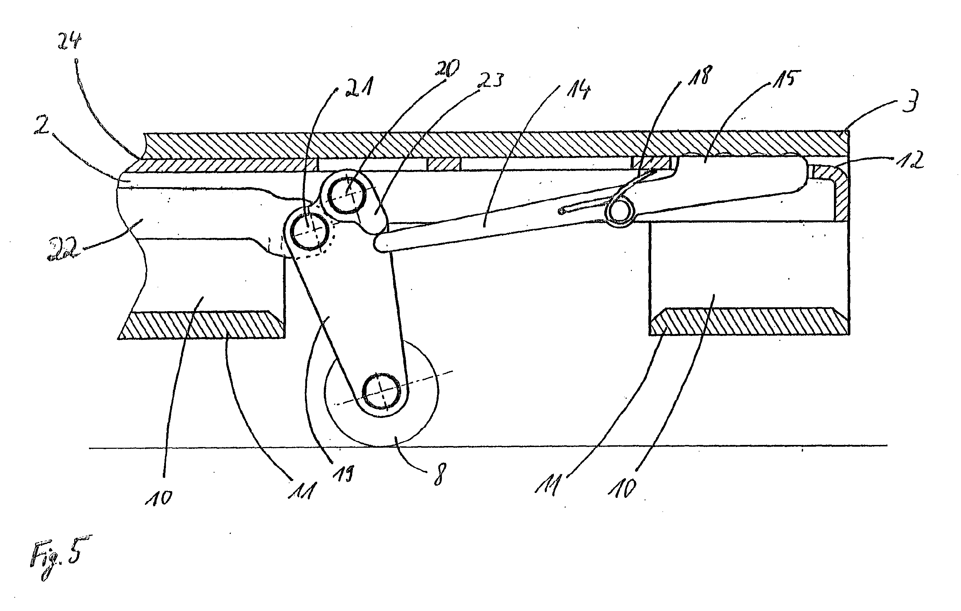

Figur 5 zeigt den lastseitigen Endbereich eines erfindungsgemäßen Lastaufnahmemittels 2 in Seitenansicht beim Anheben einer Palette 3, wobei sich eine Laufrolle 8 zwischen zwei Verbindungsteilen 11 zwischen Distanzstücken 10 der Palette 3 befindet. Das Anheben des Lastaufnahmemittels 2 geschieht, indem die Stange 22, die mit dem Hubantrieb des Hubwagens 1 verbunden ist, nach links gezogen wird. Der Hebel 19 ist über die Achse 21 mit der Stange 22 verbunden, so dass durch eine Drehung des Hebels 19 um die Achse 21 die Laufrolle 8 nach unten verschoben und das Lastaufnahmemittel 2 angehoben wird. Im gezeigten Ausführungsbeispiel wird dabei der Hebel 14, der mit dem in Höhe und Neigung gegenüber dem übrigen Teil des Lastaufnahmemittels 2 verstellbaren Bereich 15 verbunden ist, über den Hebel 23, der über die Achse 20 mit dem Hebel 19 verbunden ist, betätigt. Dadurch wird der Bereich 15 nach oben geschwenkt, bis dessen Fläche annähernd bündig zur restlichen Last tragenden Fläche 24 des Lastaufnahmemittels 2 ausgerichtet ist. Dadurch ragt der Bereich 15 über das abgeschrägte Ende der Spitze 12 des Lastaufnahmemittels 2 hinaus und trägt so die Palette 3. Beim Absenken des Lastaufnahmemittels 2 schwenkt der Hebel 19 mit der Laufrolle 8 wieder in das Lastaufnahmemittel 2 zurück und gibt somit auch den Hebel 14 wieder frei, so dass der in Höhe und Neigung gegenüber dem übrigen Teil des Lastaufnahmemittels verstellbare Bereich 15, gegebenenfalls unterstützt von der Feder 18 in die Ausgangslage innerhalb der Kontur des Lastaufnahmemittels 2 zurückkehrt.

Selbstverständlich sind auch andere Lösungen denkbar, mit denen die Verstellung des in Höhe und Neigung gegenüber dem übrigen Teil des Lastaufnahmemittels 2 verstellbaren Bereichs 15 bewirkt werden kann, sowohl mittels mechanischer als auch beispielsweise hydraulischer oder elektrischer Vorrichtungen. Eine von der Bedienperson des Flurförderzeugs auszulösende Verstellung des Bereichs 15 ist ebenso denkbar wie eine durch Hubhöhensensoren und Lastsensoren gesteuerte Verstellung. Auch die Art der Bewegung des Bereichs 15 kann, angepasst an die jeweilige Geometrie des Lastaufnahmemittels 2, sich vom gezeigten Ausführungsbeispiel unterscheiden.

Ist der Boden 9 der Palette 3, wie im Ausführungsbeispiel gezeigt, aus einem relativ weichen Werkstoff, wie beispielsweise Holz, gefertigt, drücken sich die Erhebungen 17 in den Boden 9 und sichern so die Palette 3 gegen Verrutschen. Bei aus Stahl oder anderen relativ harten Werkstoffen gefertigten Paletten sind auf der Unterseite zumeist Träger oder Versteifungsrippen angebracht, an denen die Erhebungen 17 eingreifen und so das Verrutschen der Palette 3 verhindern. Auch die Verwendung von Gummimatten oder anderen rutschfesten Belägen zu diesem Zweck ist denkbar.

## Patentansprüche

1. Flurförderzeug, insbesondere Hubwagen (1), mit einem gabelförmigen Lastaufnahmemittel (2), **dadurch gekennzeichnet, dass** das Lastaufnahmemittel (2) an seinem lastseitigen Endbereich mindestens einen Bereich (15) aufweist, der in seiner Höhe und/oder Neigung gegenüber dem übrigen Teil des Lastaufnahmemittels (2) verstellbar ist.

2. Flurförderzeug nach Anspruch 1, **dadurch gekennzeichnet, dass** die Höhe und/oder Neigung des höhen- und/oder neigungsverstellbaren Bereichs (15) des Lastaufnahmemittels (2) in Abhängigkeit von der Hubhöhe des Lastaufnahmemittels (2), vorzugsweise automatisch, einstellbar ist.

3. Flurförderzeug nach Anspruch 1 oder 2, **dadurch gekennzeichnet, dass** der höhenund/oder neigungsverstellbare Bereich (15) des Lastaufnahmemittels (2) mit einer Hubvorrichtung des Lastaufnahmemittels (2) in Wirkverbindung steht.

4. Flurförderzeug nach einem der Ansprüche 1 bis 3, **dadurch gekennzeichnet, dass** der höhen- und/oder neigungsverstellbare Bereich (15) des Lastaufnahmemittels (2) beim Überschreiten einer zur Aufnahme von Lasten, insbesondere Paletten (3), vom Boden geeigneten Hubhöhe des Lastaufnahmemittels (2) derart einstellbar ist, dass der höhen- und/oder neigungsverstellbare Bereich (15) die gleiche Höhe und/oder Neigung wie der übrige mit der Last in Kontakt stehende Teil (26) des Lastaufnahmemittels (2) aufweist.

5. Flurförderzeug nach einem der Ansprüche 1 bis 4, **dadurch, gekennzeichnet, dass** der höhen- und/oder neigungsverstellbare Bereich (15) des Lastaufnahmemittels (2) unterhalb einer zur Aufnahme von Lasten, insbesondere Paletten (3), vom Boden geeigneten Hubhöhe des Lastaufnahmemittels (2) auf eine solche Höhe und/oder Neigung einstellbar ist, bei der eine möglichst einfache Aufnahme der Last ermöglicht wird.

6. Flurförderzeug nach einem der Ansprüche 1 bis 5, **dadurch gekennzeichnet, dass** die mit der Last beaufschlagte Oberfläche des höhen- und/oder neigungsverstellbaren Bereichs (15) derart ausgebildet ist, dass ein Verrutschen der Last erschwert oder vehindert wird.

7. Flurförderzeug nach einem der Ansprüche 1 bis 6, **dadurch gekennzeichnet, dass** die mit der Last beaufschlagte Oberfläche des höhen- und/oder neigungsverstellbaren Bereichs (15) Erhebungen (17) aufweist, die insbesondere kreisförmig oder als in Querrichtung des Lastaufnahmemittels (2) sich erstreckende Rippen ausgebildet sind.

8. Flurförderzeug nach einem der Ansprüche 1 bis 7, **dadurch gekennzeichnet, dass** die Verstellung des höhen- und/oder neigungsverstellbaren Bereichs (15) durch mechanische Mittel, insbesondere einen Hebelmechanismus, vorgenommen wird, die mit der Vorrichtung zur Höhenverstellung des Lastaufnahmemittels (2), insbesondere den Lastrollenträgerhebeln (19), in Wirkverbindung stehen.
